# EUROPEAN PATENT APPLICATION

(11) **EP 4 043 123 A1**
(43) Date of publication of application: **17.08.2022**
(21) Application number: 21156853.0
(22) Date of filing: 12.02.2021
(51) Int. Cl.: B22F 1/00, C08G 63/47, C08G 63/48, C08G 63/668, C08G 63/91, C09F 9/00, C09J 201/00, C22C 33/02

(54) **METAL POWDER COMPOSITION COMPRISING A BINDER**

(71) Applicant: Höganäs AB (publ), 263 83 Höganäs (SE)
(72) Inventor: Ahlin, Åsa, 26337 Höganäs (SE); Ahlqvist, Anna, 26395 Farhult (SE); Knutsson, Per, 26243 Ängelholm (SE); Sörensen, Kent, 28435 Perstorp (SE)
(74) Representative: Blurock, Maryna

(57) **Abstract**

The invention relates to a powder metallurgical composition for making compacted parts, comprising an iron or iron-based powder and a binder comprising a drying oil, wherein the drying oil comprises an ester of conjugated fatty acid and a polyol.

## Description

### TECHNICAL FIELD OF THE INVENTION

The present invention relates to a powder metallurgical composition for making compacted parts. Specifically the invention relates to an iron powder composition comprising an improved binder.

### BACKGROUND

Metal powders are used in a wide range of industries and applications for manufacture of metal components with complex and intricate features. The metal powders are filled into a mold, pressed and sintered at elevated temperatures. It is an environmentally friendly and cost-effective method as it is an energy and resource efficient production method.

The quality requirements of these metal products are continuously raised, and consequently new powder composition having improved properties are requested. Some of the most important properties of the final, sintered products are the density and dimensional tolerances, which above all must be consistent.

Problems with size variations in the final product often originate from inhomogeneities in the powder mixture.

These problems are especially pronounced with powder mixtures including pulverulent components which differ in size, density and shape, a reason why segregation occurs during the transport, storage and handling of the powder composition. This segregation implies that the composition will be non-uniformly composed, which in turn means that parts, made of the powder composition are differently composed and consequently have different properties. A further problem is that fine particles, particularly those of lower density, such as graphite, cause dusting during handling of the powder mixture.

By adding a binder to the powder composition, the segregation and dusting problems may be reduced or eliminated. The purpose of the binder is to firmly and effectively bind the small size particles of additives, such as alloying components, to the surface of the base metal particles and, consequently, reduce the problems of segregation and dusting.

One type of binding agents is based on tall oil, which is a drying oil consisting of tree resins and containing about 20-50% rosin acids (tall rosin) and about 35-55% free fatty acids. Such binding agents are disclosed in the US patents 4676831, 4834800, 6682579B2, 6068813 and 5429792.

US4676831 (Engström) generally discloses the use of certain tall oils as binding agents.

US4834800 (Semel) discloses the use of certain film forming and water insoluble alkyd resins which are the products of a polyhydric alcohol and a polybasic acid in the presence of a modifier, possibly a drying oil or a polymerizable liquid monomer such as e.g. linseed oil, soybean oil, tung oil or tall oil.

US6682579(Narasimhan) and US6068813(Semel) disclose the possible use of tall oil esters as binders in metallurgical powder compositions.

US5429792 (Luk) discloses a metallurgical powder composition capable of being compacted at elevated temperatures and comprising an iron-based powder, an alloying powder, a high temperature compaction lubricant and a binder. Preferred binding agents include cellulose ester resins, high molecular weight thermoplastic phenolic resins, hydroxyalkyl cellulose resins, and mixtures thereof.

US3696230 and GB1324486 disclose a mixture comprising iron powder and a binder.

Although state-of-the art binders perform satisfactorily, an increased bonding power and especially a maintained bonding with time are beneficial when components with ever increased complex shapes and with higher demands on dimension variation are produced.

The present invention concerns a solution to this problem. This is achieved by the design of the drying oil, by selecting suitable drying fatty acid and polyalcohol, and by adequate control of the drying time of the oil. The choice of specific fatty acid contributes also to better binding of fine particles and to retain the binding during storage.

### SUMMARY OF THE INVENTION

In one aspect of the invention it is disclosed a powder metallurgical composition for making compacted parts, comprising an iron or iron-based powder and a binder comprising a drying oil, wherein the drying oil comprises an ester of conjugated fatty acid and a polyol.

In another aspect we disclose the powder metallurgical composition for making compacted parts according the preceding aspect, wherein conjugated fatty acid is dehydrated castor oil fatty acid.

In yet another aspect of the invention we disclose the powder metallurgical composition for making compacted parts according to the preceding aspects, wherein the binder further comprises a drying agent.

In yet another aspect it is disclosed the powder metallurgical composition for making compacted parts according to any of the preceding claims, wherein the polyol is selected from: monopentaerythritol, di-pentaerythritol, tri-pentaerythritol, di-trimethylolpropane, trimethylolpropane, trimethylolethane and glycerol.

In yet another aspect it is disclosed the powder metallurgical composition for making compacted parts according to the previous aspect, wherein the polyol is alkoxylated by the alkoxylation agent, such as ethylene oxide, propylene oxide or butylene oxide thereby creating ethoxylated, propoxylatated or butoxylated.

In yet another aspect it is disclosed the powder metallurgical composition for making compacted parts according to the previous aspects, wherein the degree of alkoxylation agent is between 2 to 25 moles of the said alkoxylation agent per one mole of polyol.

In yet another aspect it is disclosed the powder metallurgical composition for making compacted parts according to any of the preceding claims, wherein the degree of esterification of hydroxyl groups on the used polyol is 80-100%, preferably 90-100%.

In yet another aspect it is disclosed the powder metallurgical composition for making compacted parts according to any of the preceding claims, wherein at least one component of the drying agent is selected from the group of oil soluble salts of Zn, Co, Mn, Pb, Zr, or Ca.

In yet another aspect it is disclosed the powder metallurgical composition for making compacted parts according to the previous aspect, wherein the drying agent is a polymeric drier containing cobalt or an organic cobalt salt.

In yet another aspect it is disclosed the powder metallurgical composition for making compacted parts according to any of the preceding aspects, wherein the amount of binder is between 0.01-1.0 wt% of the powder metal composition, preferably 0.01-0.5 wt% of the powder metallurgical composition, most preferably 0.01-0.2 wt%.

In yet another aspect it is disclosed the powder metallurgical composition for making compacted parts according to any of the preceding aspects, wherein binder has a drying time of 0.2-4 hours, preferably 0.2-3 hours.

In yet another aspect it is disclosed the powder metallurgical composition for making compacted parts according to any of the preceding aspects, wherein said powder further comprises graphite.

In yet another aspect it is disclosed the powder metallurgical composition for making compacted parts according to any of the preceding aspects, wherein said powder further comprises at least one lubricant.

In yet another aspect it is disclosed the powder metallurgical composition for making compacted parts according to any of the preceding aspects, further comprising at least one additive selected from the group consisting of alloying elements, sintering aids, machinability improving agents and hard phase materials.

In yet another aspect it is disclosed the powder metallurgical composition for making compacted parts according to any of the preceding aspects, wherein viscosity of the binder composition is 50- 5000 mPas, preferably 100-1500 mPas measured at 23°C with Brookfield CAP viscosimeter at 200 rpm, cone 1.

In yet another aspect it is disclosed a method for obtaining a powder metallurgical composition for making compacted parts, said method comprising: mixing a conjugated fatty acid with polyol, in a molar ratio corresponding to 80-130% fatty acid on available hydroxyl groups coming from the polyol at the temperature between 180°C and 220°C until the esterification reached less than 49mg KOH/g, preferably between 5 to 30 mg KOH/g, thereby obtaining an ester of conjugated fatty acid and polyol; optionally adding a drying agent; and further mixing with iron powder thereby providing the powder metallurgical composition for making compacted parts.

### DETAILED DESCRIPTION OF THE INVENTION

It is disclosed herein a powder metallurgical composition for making compacted parts, comprising an iron or iron-based powder and a binder comprising a drying oil, wherein the drying oil comprises an ester of conjugated fatty acid and a polyol.

A powder metallurgical composition is a dry composition, comprising a metal powder, such as iron powder and organic and inorganic additives.

Iron-based powder consists largely from pure iron and the additives, the additive typically not exceeding 5% by weight in the iron-based powder.

The iron or iron-based powder may be an essentially pure iron powder or a mixture of different iron-powders which is admixed with the additives. The powder may also be a pre-alloyed powder or a diffusion or partially alloyed powder. The particle size of the iron or iron-based particles preferably have a maximum size up to about 500 µm measured in a set of vertical sieves with mesh sizes.

Examples of alloying elements are copper, molybdenum, chromium, nickel, tungsten, manganese, phosphorus and carbon in the form of graphite, which are either used separately or in combination. The commonly used elements copper and nickel may suitably be used in amounts up to 3 wt% and 5 wt%, the amount of graphite may vary between 0.1 and 2 wt% in the iron-based powder. These additives are generally powders having a smaller particle size than the base iron powder, and most additives have a particle size of less than about 20 µm, measured with laser diffraction method.

Furthermore, the compositions according to the present invention may include common additives such as sintering aids, hard phase materials, machinability improving agents and lubricants.

In some of the embodiments the binder for the powder metallurgical composition comprises a drying agent.

In the context of the present invention a drying oil is chemically described as an ester of a polyunsaturated fatty acid and a polyol, which polymerizes (cures) through a reaction with oxygen, forming solid films capable of binding finer particles to the iron-based powder particles.

The amount of the drying oil in the iron-based powder compositions is 0.01 - 1.0 wt% depending on the type of drying oil used and desired properties of the metal powder composition.

In some embodiments the composition further comprises graphite.

The purpose of the binder is, as stated above, to firmly and effectively bind particles of graphite and small particles of other additives, other alloying elements and other additives to the surface of the base metal particles and, consequently, reduce the problems of segregation and dusting, meaning that the binder must have a high bonding power. Bonding power is an ability to bind graphite and is calculated as the ratio between the grams of bonded graphite to grams added binder.

By designing the molecular structure of the drying oil, the initial bonding power of the binder can be increased compared to state-of-art known binders.

It has now surprisingly been found that by using drying oil based on an ester of conjugated fatty acids, a metal powder composition can be formulated with improved bonding power that is retained over longer times. The improved drying oil gives less dusty formulations and a substantial narrowing of the weight scatter range of components produced.

Additionally, the added amount of the binder can be increased to improve the bonding power further, without significantly influencing other properties of the powder metallurgical composition negatively, as powder properties.

The binder containing conjugated fatty acids gives more hydrophobic carbon-carbon bonds and less hydrophilic bonds between the fatty acids and dry faster than a binder containing non-conjugated fatty acids.

The through drying time of the binder is preferably controlled to a value of less than 4 hours by the addition of at least one drying agent to the drying oil.

Furthermore, in order to facilitate the production of homogenous bonded powder mixtures on an industrial scale, the drying of the binder shall not be too fast, preferably the drying time should not be shorter than about 30 minutes. However, other preferred intervals of the drying time may be applicable depending of the metal powder composition. The drying time values in this application refer to a film thickness of 38 µm measured at ambient temperature and humidity with the aid of a Beck-Koller Drying Recorder.

Conjugated fatty acids are fatty acids having at least two unsaturated links with alternating single and double bonds. Typically, in conjugated fatty acids with two double bonds the double bonds are located at position carbon 9 and 11. This results in a delocalization of electrons along the double-bonded carbons. It has been surprisingly discovered that the conjugated fatty acid derivatives are improving bonding power and drying time of the composition without having any undesired impact on the powder metallurgical composition in accordance with the invention. Surprisingly it has also been found that the bonding power is retained over a much longer period.

Several different conjugated fatty acids are available such as dehydrated castor oil fatty acid, conjugated soybean fatty acid and conjugated sunflower fatty acid. Several commercial suppliers are available, one example is Oleon n.v.

The preferred fatty acid for production of the ester according to the invention is the fatty acid from dehydrated castor oil.

For example, Nouracid DE656 supplied by Oleon may be used as a starting product for obtaining the ester according to the invention. According to specification from the supplier, the starting product has the following characteristics:

| | | |
|---|---|---|
| Acid value | 193-205 mg KOH/g | |
| Saponification value | 198-202 mg KOH/g | |
| Iodine value | 165-175 g I₂/100g | |
| Color | 0-2 Gardner | |
| Fatty acids C18:1 | 5-8% | |
| Fatty acids C18:2 | 22-29% | |
| Fatty acids C18:3 | max 1% | |
| Fatty acids conjugated | 60-65% | |
| Fatty acids saturated | <=C18 | 2-5% |
| Fatty acids saturated | >=C20 | max 1% |

The ester of the conjugated fatty acid and the polyol can be obtained by using an excess of hydroxyl groups or by having an excess of fatty acids in order to get a higher conversion of hydroxyl groups and thereby a higher fatty acid content in the ester. The molar excess of fatty acid to hydroxyl groups can be up to 1-30%, but preferably 5-15%. The esterification process is typically performed at 190-240°C or in some embodiments 180°C to 240°C under constant inert gas blanket. A catalyst can be used to facilitate the reaction. The reaction water is distilled off. The reaction is stopped at desired conversion measured by acid number, the residual carboxylic groups.

In some embodiments, the ester according to the invention has a viscosity 100-1500 mPas at 23°C, cone 1 with Brookfield CAP viscosimeter at 200 rpm.

The viscosity range is selected such as to get proper mixing with iron-based powder during production of the powder metallurgical composition according to the invention.

According to some embodiments, the viscosity may be in the range of 100-1500 mPas, preferably 200 to 1100 mPas measured at 23°C, 200 rpm cone 1, in some embodiments 800 to 400 mPas measured at 23°C, 200 rpm cone 1.

A lower viscosity is preferably as it facilitates a proper mixing with the metal powder components in the production.

The acid number on the preferred ester according to the invention shall be lower than 49 mg KOH/g, preferably 5-30 mg KOH/g.

The preferable ester according to the invention ester is obtained through the esterification of dehydrated castor oil fatty acid.

In one of the embodiments of the powder metallurgical composition for making compacted parts the binder further comprises a drying agent. A drying agent of the present invention are compounds facilitating controlled drying of a drying oil, making it possible to adjust the drying time of the oil in conformity with the current process requirements. The drying agents should be soluble in the drying oil, and these agents may chemically be described as metallic soaps, in some instances it may comprise alkaline earth metals.

The drying agent is selected from the group of oil soluble salts of zinc, cobalt, manganese, lead, zirconium or calcium. A mix of drying agents can be used. Cobalt can also be added as a cobalt containing polymer.

The amount of the drying agent in the binder is preferably between 0.01 wt% and 1.0 wt% and more preferably 0.01 wt% and 0.5 wt%, calculated as pure metal in a binder.

In some embodiments suitable polyols for making the ester with the conjugated fatty acid selected from monopentaerythritol selected from: monopentaerythritol, tri-pentaerythritol, di-trimethylolpropane, trimethylolethane, trimethylolpropane, and glycerol and preferably di-pentaerythritol

In some embodiments in the powder metallurgical composition for making compacted parts the polyol is alkoxylated by an alkoxylation agent, such as ethylene oxide, propylene oxide or butylene oxide.

In some embodiments in the powder metallurgical composition for making compacted parts the degree of alkoxylation agent is between 2 to 25 moles of the said alkoxylation agent per one mole of polyol.

In some embodiments in the powder metallurgical composition for making compacted parts the degree of esterification of hydroxyl groups on the used polyol is 80-100%, preferably 90-100%.

In some embodiments, the powder metallurgical composition for making compacted parts wherein the ester of the conjugated fatty acid and the polyol is further modified with an unsaturated dicarboxylic compound, such as maleic anhydride, citraconic anhydride, itaconic anhydride or diacid thereof.

Those skilled in the art will appreciate that numerous changes and modifications may be made to the preferred embodiments of the invention and that such changes and modifications may be made without departing from the spirit of the invention. The following examples further describe synthesis of binders, their properties, and the improvement of properties when used in metal powder formulations.

### EXAMPLES

In the Examples the following lubricants were used:
Lubricant 1 - Amide waxes such as ethylene bis stearamide
Lubricant 2 - Composite amide wax
Lubricant 3 - Polyamide lubricant

### SYNTHESIS OF BINDERS

### Example 1: Synthesis of Sample 1 in accordance with the invention

In a 4-necked reaction flask equipped with a stirrer, inert gas inlet, thermometer connected to thermoregulator and heating mantle, and cooling condenser, were dehydrated castor oil fatty acid (Nouracid DE 656 supplied by Oleon n.v.) and dipentaerythritol (supplied by Perstorp AB) charged in a molar ratio 5.7:1.0. The temperature was raised to 210°C and maintained until esterification was completed.

### Final specification of Sample 1:

Viscosity: 1100 mPas at 23°C, 200 rpm, cone 1, with Brookfield CAP viscosimeter
Acid number: 11.5 mg KOH/g
Hydroxyl number: 22 mg KOH/g

### Example 2: Synthesis of Sample 2 in accordance with the invention

In a 4-necked reaction flask equipped with a stirrer, inert gas inlet, thermometer connected to thermoregulator and heating mantle, and cooling condenser were dehydrated castor oil fatty acid (Nouracid DE 656 supplied by Oleon n.v.) and dipentaerythritol (supplied by Perstorp AB) charged in a molar ratio 6.3:1.0. An esterification catalyst was charged in 300 ppm, Tyzor TPT. The temperature was raised to 190°C and maintained until esterification was completed.

### Final specification of Sample 2:

Viscosity: 900 mPas at 23°C, 200 rpm, cone 1, with Brookfield CAP
Acid number: 25.1 mg KOH/g
Hydroxyl number: 27 mg KOH/g

### Example 3: Synthesis of Sample 3 in accordance with the invention

In a 4-necked reaction flask equipped with a stirrer, inert gas inlet, thermometer connected to thermoregulator and heating mantle, and cooling condenser were dehydrated castor oil fatty acid (Nouracid DE 656 supplied by Oleon n.v.) and dipentaerythritol (supplied by Perstorp AB) charged in a molar ratio 5.7:1.0. The temperature was raised to 195°C and maintained until esterification reached an acid number of 24 mg KOH/g then it was cooled down to room temperature. In a second step maleic anhydride was charged in an amount of 0.94 wt% to the ester from step 1 as described in the standard ASTM D5895. The temperature was raised to 120°C and kept until the free content of maleic anhydride was less than 0.01 wt%.

### Final data:

Viscosity: 810 mPas at 23°C, 200 rpm, Synpo cone 4, with Brookfield CAP
Acid number: 26.9 mg KOH/g
Hydroxyl number: 37 mg KOH/g

### Example 4. Preparation of the iron-based metal powder composition

The binder was evaluated in a formulation:

| | |
|---|---|
| Iron powder | 96,2 wt% |
| Cu-200(alloying elements) | 2 wt% |
| Graphite | 0.8 wt% |
| Lubricant 1 | 0.6 wt%(unless otherwise stated) |
| Binder | 0.08 wt% of the binder containing 0.05 wt% cobalt metal of a cobalt polymer drier, unless otherwise stated |

The new binders were compared with a reference binder that is state-of-the-art binder.

### In the following examples:

Drying was measured on binder with cobalt drier and no other additives.

The new binder(s) were evaluated on flow, apparent density, viscosity, bonding power and drying.

Drying was measured by Beck-Koller Drying Recorder according to ASTM D5895 standard.

Flow and were measured on Hall flowmeter according to ISO standard 4490:2018 and Apparent density (AD) was measured according Gustavsson standar ISO 13517:2020.

Viscosity was measured by Malvern Instruments Kinexus KNX2100.

Bonding power was measured according to Höganäs internal method (BAPTU):
The BAPTU method is based on measurement of the discoloration of a paper strip with a spectrophotometer, a Konica Minolta CM600D, when a sample of a powder mix has slide along the paper strip. The discoloration of the paper will depend of the amount of free graphite in the sample and the measurement will give a lightness index for the paper. This lightness index will be a measurement of the bonding degree of graphite in the mix. A sample of 30g is placed in the inner end on a paper strip that is fitted in a horizontal chute. The chute is then tilted with a speed of 30°/s with the rotational axis 14 cm from the upper end and the powder sample is then sliding along the paper. This is done three times for each mix and then is the lightness index measured at two positions of each paper strip, 12 and 15 cm from the top of the strip. An average value of the lightness index, L*, is then calculated form these six measurements.

### Example 5: Drying, binding power, flow and apparent density Sample 1

a) Drying in minutes according to Beck Koller Drying Recorder in accordance with the ASTM D5895 standard. Step 1 and 2 are the steps according to ASTM D5895 standard.

| **Sample** | **Step 1 (min)** | **Step 2 (min)** |
|---|---|---|
| Sample 1 | 40 | 70 |
| Reference | 120 | 180 |

Significant faster drying for the new binder
b) Bonding power

| **Mix** | **Time** | **L*** |
|---|---|---|
| Sample 1 | 1 week | 86.1 |
| Reference | 1 week | 83.2 |

Improved bonding power with the new binder, wherein L* is a bonding power measured according to BAPTU method.
c) Flow and apparent density according to Hall

| Mix | Flow (24h) (s/50g) | AD (24h) (g/cm³) | Flow (1 w) (s/50g) | AD (1 w) (g/cm³) |
|---|---|---|---|---|
| Sample 1 | 33 | 3.08 | 33 | 3.11 |
| Reference | 34 | 3.09 | 32.1 | 3.15 |

Flow and density comparable to the reference sample.
d) Flow and apparent density according to Gustavsson

| Mix | **Flow (24h) (s/50g)** | **AD (24h) (g/cm³)** | **Flow (1 w) (s/50g)** | **AD (1 w) (g/cm³)** |
|---|---|---|---|---|
| Sample 1 | 40 | 3.08 | 42 | 3.11 |
| Reference | 44 | 3.10 | 43 | 3.14 |

Flow and density comparable to reference

### Example 6: Drying, bonding power, flow and apparent density of Sample 2

### a) Graphite Bonding power

| **Iron-based powder composition** | **Time** | **L*** |
|---|---|---|
| 0.08 wt% of the binder, Sample 2 | 1 w | No value |
| 0.10 wt% of the binder Sample 2 | 1 w | 86.2 |
| 0.08 wt% of the binder Reference | 1 w | 82.6 |
| 0.08 wt% of the binder Sample 2 | 8 w | 83.1 |
| 0.10 wt% of the binder Sample 2 | 8 w | 83.0 |
| 0.08 wt% of the binder Reference | 8 w | 76.8 |

The new binder has significant better binding power than reference.

The new binder maintains a better binding power over time.

### b) Flow and apparent density according to Gustavsson

| **Iron-based powder composition** | **Flow (24h) (s/50g)** | **AD (24h) (g/cm³)** | **Flow (1 w) (s/50g)** | **AD (1 w) (g/cm³)** |
|---|---|---|---|---|
| 0.08% - Sample 2 | 41.2 | 3.06 | 41.6 | 3.07 |
| 0.10% - Sample 2 | 44.0 | 3.01 | 42.5 | 3.01 |
| 0.08% - Reference | 45.7 | 3.01 | 43.3 | 3.05 |

The new binder has better flow and slightly better density than the reference

### c) Graphite Binding power with different lubricants and longtime tests

| **Iron-based powder composition** | **Time** | **L*** |
|---|---|---|
| Sample 2, lubricant 1 | 1 w | 86.1 |
| Sample 2, lubricant 2 | 1 w | 86.0 |
| Sample 2, lubricant 3 | 1 w | 84.6 |
| Reference | 1 w | 84.4 |
| Sample 2, lubricant 1 | 3 w | 83.2 |
| Sample 2, lubricant 2 | 3 w | 83.6 |
| Sample 2, lubricant 3 | 3 w | 82.0 |
| Reference | 3 w | 81.4 |
| Sample 2, lubricant 1 | 11 w | 81.5 |
| Sample 2, lubricant 2 | 11 w | 81.5 |
| Sample 2, lubricant 3 | 11 w | 79.8 |
| Reference | 11 w | 77.0 |

The new binder improves the binding power with different lubricants maintains better the binding power over time.

### d) Flow and apparent density according to Gustavsson with different lubricants

| **Iron-based powder composition** | **Flow (24h) (s/50g)** | **AD (24h) (g/cm³)** |
|---|---|---|
| Sample 2, lubricant 1 | 31.5 | 3.01 |
| Sample 2, lubricant 2 | 32.1 | 2.97 |
| Sample 2, lubricant 3 | 30.6 | 3.14 |
| Reference | 32.6 | 3.03 |

Lubricant 3 gives better density and flow in combination with the new binder.

### Example 7: Binding power, flow and apparent density of Sample 3

### a) Bonding power

| **Iron-based powder composition** | **Time** | **L*** |
|---|---|---|
| Sample 3 | 1 week | 85.1 |
| Reference | 1 week | 85.3 |
| Sample 3 | 2 week | 84.1 |
| Reference | 2 week | 81.8 |

Sample 3 maintain the binding power better over time than the reference.

### b) Flow and apparent density according to Gustavsson

| **Iron-based powder composition** | **Flow(24h) (s/50g)** | **AD (24h) (g/cm³)** | **Flow (1 w) (s/50g)** | **AD (1 w) (g/cm³)** |
|---|---|---|---|---|
| Sample 3 | 42.3 | 2.95 | 40.0 | 2.98 |
| Reference | 42.6 | 3.02 | 40.2 | 3.06 |

Flow is similar but density slightly poorer for sample 3

### Example 8: Evaluation of binders produced in production scale

A production lot of each binder similar to binder 'sample 1' and 'sample 2' above were produced. Sample of these binders were used for production of iron powder mixes in pilot scale (250kg) with the same composition as the lab scale mix in previous examples. A reference mix with the state-of -art binder was also produced for comparison.

### Binder properties

| **Binder** | **Viscosity (mPas)** | **Acid value (mg KOH/g)** | **OH value (mg KOH/g)** |
|---|---|---|---|
| Pilot binder 1 | 300 | 14 | 27 |
| Pilot binder 2 | 233 | 22 | 22 |
| Sample 1 | 1100 | 11,5 | 22 |
| Sample 2 | 900 | 25,1 | 27,2 |

The viscosity of the pilot binders were considerably lower than for the 'Sample' binders, which is beneficial for production of iron powder mixes in production scale.

### Mix properties

For the mixes were powder properties and bonding power evaluated. The flow time in Gustavsson funnel was several seconds faster for the mixes with the 'pilot binders' than for the mix with reference binder. The obtained AD level were similar for all mixes.

### Powder properties

| **Mix** | **Flow (s/50g)** | **AD (g/cm³)** |
|---|---|---|
| Pilot binder 1 1w | 37,1 | 3,06 |
| Pilot binder 2 1w | 37,5 | 3,06 |
| Reference 1w | 41,3 | 3,04 |
| Pilot binder 1 4w | 36,8 | 3,07 |
| Pilot binder 2 4w | 36,7 | 3,08 |
| Reference 4w | 40 | 3,08 |
| Pilot binder 1 8w | 37,2 | 3,08 |
| Pilot binder 2 8w | 36,7 | 3,08 |
| Reference 8w | 39,2 | 3,09 |

The initial bonding power according to the BAPTU method was considerably higher for the mixes with 'pilot binder' and the bonding power was more stable with time than for the reference mix. These results confirm the findings for the mixes with the lab scale binders.

### Bonding power (BAPTU)

| **Mix** | **1 week** | **4 weeks** | **8 weeks** |
|---|---|---|---|
| Pilot binder 1 | 83,9 | 83,5 | 82,2 |
| Pilot binder 2 | 82,3 | 82,0 | 81,8 |
| Reference | 78,3 | 75,7 | 74,3 |

The mixes were compacted in a Dorst EP70M press at 600 MPa in a 35/25mm ring tool to a height of 20mm. The tool was heated to 45°C and about 200 parts were compacted of each mix. The compaction force, ejection energy and weight for every part were registered. The standard deviation for the weight scatter were calculated for each compaction series. Some rings were sampled after 50 and 150 compacted parts. The green density was measured for these rings.

### Results from compaction trials

| **Mix** | **Weight average (g)** | **Standard deviation (%)** | **Ejection energy (J)** |
|---|---|---|---|
| Pilot binder 1 | 66,88 | 0,308 | 758 |
| Pilot binder 2 | 67,16 | 0,335 | 752 |
| Reference | 67,01 | 0,456 | 739 |

The evaluation of the weight scatter for the parts compacted of the test mixes showed that the standard deviation for the weight of the part compacted of the mixes with 'pilot binders' were lower than for the parts of the reference mix. The reference mix had a weight scatter that was 50% higher than for the mixes with 'pilot binders' during compaction with the used settings. The average ejection energy for the compacted parts were in the same range for all mixes.

### Green density for compacted parts

| **Mix** | **Compaction force (kN)** | **GD (50 parts) (%)** | **GD (150 parts) (%)** |
|---|---|---|---|
| Pilot binder 1 | 280 | 7,02 | 7,00 |
| Pilot binder 2 | 285 | 7,03 | 7,01 |
| Reference | 285 | 7,01 | 7,01 |

A compaction force of 283kN corresponds to 600MPa for the compacted component. The average compaction force for these compaction series were close to the desire compaction force and the measured green density for the sampled parts were similar for both mixes.

### Example 9: Evaluation of mixes with different amount of added binder

A sample of the production lot of 'sample 1' was taken for production of lab scale mixes (3kg) with different amount of added binder. The amount of added binder to the test mixes were 0.06%, 0.08%, 0.10% and 0.12% respectively. Apart from the amount of binder the composition of the mixes was the same as in previous examples. A reference mix with the state-of-art binder was also produced for comparison.

### Mix properties

The powder properties and bonding power were evaluated for the mixes. The flow time in Gustavsson funnel after 1 week was similar independent of the amount of added binder for all test mixes. The AD decreased somewhat with increased amount of binder in the mix, but the influence was not as pronounced as for other earlier evaluated binders.

### Powder properties 1 week

| **Mix** | **Flow (s/50g)** | **AD (g/cm³)** |
|---|---|---|
| Pilot binder - 0.06% | 43.0 | 3.11 |
| Pilot binder - 0.08% | 43.3 | 3.08 |
| Pilot binder - 0.10% | 42.5 | 3.07 |
| Pilot binder - 0.12% | 43.6 | 3.04 |
| Reference | 38.9 | 3.11 |

The bonding power according to the BAPTU method increased considerably with the amount of added binder.

### Bonding power (BAPTU)

| **Mix** | 1 week |
|---|---|
| Pilot binder - 0.06% | 81.8 |
| Pilot binder - 0.08% | 84.4 |
| Pilot binder - 0.10% | 85.6 |
| Pilot binder - 0.12% | 87.3 |
| Reference | 81.4 |

## Claims

1. A powder metallurgical composition for making compacted parts, comprising
- an iron or iron-based powder and
- a binder comprising a drying oil,
- wherein the drying oil comprises an ester of conjugated fatty acid and a polyol.

2. The powder metallurgical composition for making compacted parts according to claim 1, wherein conjugated fatty acid is dehydrated castor oil fatty acid.

3. The powder metallurgical composition for making compacted parts according to claim 1 or 2, wherein the binder further comprises a drying agent.

4. The powder metallurgical composition for making compacted parts according to any of the preceding claims, wherein the polyol is selected from: monopentaerythritol, di- pentaerythritol, tri-pentaerythritol, di-trimethylolpropane, trimethylolpropane, trimethylolethane and glycerol.

5. The powder metallurgical composition for making compacted parts according to claim 4, wherein the polyol is alkoxylated by an alkoxylation agent, such as ethylene oxide, propylene oxide or butylene oxide.

6. The powder metallurgical composition for making compacted parts according to claim 4 or 5, wherein the degree of alkoxylation agent is between 2 to 25 moles of the said alkoxylation agent per one mole of polyol.

7. The powder metallurgical composition for making compacted parts according to any of the preceding claims, wherein the degree of esterification of hydroxyl groups on the used polyol is 80-100%, preferably 90-100%.

8. The powder metallurgical composition for making compacted parts according to any of the preceding claims, wherein at least one component of the drying agent is selected from the group of oil soluble salts of Zn, Co, Mn, Pb, Zr, or Ca.

9. The powder metallurgical composition for making compacted parts according to claims 8, wherein the drying agent is a polymeric drier containing cobalt or an organic cobalt salt.

10. The powder metallurgical composition for making compacted parts according to any of the preceding claims, wherein the amount of binder is between 0.01-1.0 wt% of the powder metal composition, preferably 0.01-0.5 wt% of the powder metallurgical composition, most preferably 0.01-0.2 wt%.

11. The powder metallurgical composition for making compacted parts according to any of the preceding claims, wherein binder has a through drying time of 0.2-4 hours, preferably 0.2-3 hours.

12. The powder metallurgical composition for making compacted parts according to any of the preceding claims, wherein said powder further comprises graphite.

13. The powder metallurgical composition for making compacted parts according to any of the preceding claims, wherein said powder further comprises at least one lubricant.

14. The powder metallurgical composition for making compacted parts according to any of the preceding claims, further comprising at least one additive selected from the group consisting of alloying elements, sintering aids, machinability improving agents and hard phase materials.

15. The powder metallurgical composition for making compacted parts according to any of the preceding claims, wherein viscosity of the binder composition is 50- 5000 mPas measured at 23°C, preferably 100-1500 mPas measured at 23°C with Brookfield 200 rpm, cone 1.

16. A method for obtaining a powder metallurgical composition for making compacted parts, said method comprising:
- mixing a conjugated fatty acid with polyol, in a in a molar ratio corresponding to 80-130% fatty acid on available hydroxyl groups coming from the polyol at the temperature
at the temperature between 180°C and 220°C for;
until the esterification reached less than 49mg KOH/g, preferably between 5 to 30 mg KOH/g; thereby obtaining an ester of conjugated fatty acid and polyol;
optionally adding a drying agent;
further mixing with iron powder
thereby providing the powder metallurgical composition for making compacted parts.
